# EUROPÄISCHE PATENTANMELDUNG

(11) **EP 0 698 782 A1**
(43) Veröffentlichungstag der Anmeldung: **28.02.1996**
(21) Anmeldenummer: 95111946.0
(22) Anmeldetag: 29.07.1995
(51) Int. Cl.: G01D 13/10, G01P 1/08

(54) **Anzeigeinstrument mit einem Zifferblatt**

(30) Priorität: 25.08.1994 DE 4430169
(71) Anmelder: Moto Meter GmbH, D-71229 Leonberg (DE)
(72) Erfinder: Knoll, Peter, Prof. Dr., D-76275 Ettlingen (DE)
(74) Vertreter: Voss, Klaus, Dipl.-Ing.

(57) **Zusammenfassung**

Es wird ein Anzeigeinstrument mit einem Zifferblatt (1) vorgeschlagen, bei dem das Zifferblatt (1) durch Einschieben an einer Frontplatte (2) befestigt wird, über der ein Zeiger (7) beweglich angeordnet ist.

## Beschreibung

### Stand der Technik

Die Erfindung geht aus von einem Anzeigeninstrument nach dem Oberbegriff des Hauptanspruchs. Aus der DE-PS 38 34 229 ist ein Tachometer für ein Kraftfahrzeug bekannt, bei dem sich ein drehend gelagerter Zeiger vor einem Zifferblatt bewegt. Das Zifferblatt ist dabei fest mit dem Tachometergehäuse verbunden und weist somit eine nicht veränderliche, für den Tachometer gültige Skalierung auf.

### Vorteile der Erfindung

Das erfindungsgemäße Anzeigeinstrument mit den kennzeichnenden Merkmalen des Hauptanspruchs hat demgegenüber den Vorteil, daß das Zifferblatt an einer Frontplatte des Anzeigeinstruments durch Einschieben befestigbar ist und daß dadurch ein einziges Anzeigeinstrument mit verschiedenen Zifferblättern ausstattbar ist. Somit kann ein einziges Anzeigeinstrument durch Ausstattung mit je einem anderen Zifferblatt für verschiedene Anwendungen, wie z.B. Fahrzeugtypen, oder national übliche Einheitensysteme angepaßt werden.

Durch die in den Unteransprüchen aufgeführten Maßnahmen sind vorteilhafte Weiterbildungen und Verbesserungen des im Hauptanspruch angegebenen Anzeigeinstruments möglich.

Besonders vorteilhaft ist es, das Zifferblatt lösbar befestigbar zu gestalten, da so auch ein Auswechseln des Zifferblattes gegen ein anderes Zifferblatt mit geringem Aufwand möglich ist.

Die Halterung des Zifferblattes mittels Rastelementen an der Frontplatte stellt eine besonders praktische, weil mehrfach verwendbare und ein Anbringen des Zifferblattes ohne Montagewerkzeug erlaubende Art der Halterung des Zifferblattes dar.

Es erweist sich außerdem als Vorteil, wenn die Frontplatte eine Vertiefung aufweist, in die das Zifferblatt einlegbar ist, da durch die Vertiefung auch eine automatische Justierung der Lage des Zifferblattes erfolgt. Außerdem kann dabei ein Zifferblatt in etwa senkrecht zur Zifferblattebene in die Vertiefung eingelegt werden, wobei diese Montagerichtung üblicherweise besonders leicht zugänglich ist, wodurch sich das Anbringen des Zifferblattes an der Frontplatte vereinfacht.

Die Bestückung der Frontplatte mit wenigstens einer Gleitschiene, so daß das Zifferblatt in den Spalt zwischen der Gleitschiene und der Frontplatte einschiebbar ist, bietet den Vorteil, daß mit nur geringem Aufwand an Zusatzelementen eine Nachrüstbarkeit des Anzeigeinstruments mit verschiedenen Zifferblättern erreicht ist.

Die Anordnung einer Skalierung, dort wo das Zifferblatt beim Befestigen an der Frontplatte zu liegen kommt, bildet eine vorteilhafte Ausgestaltung, da so eine Art Voreinstellung des Anzeigeinstruments dergestalt erfolgt, daß bei einem nicht eingelegten Zifferblatt die bereits eingedruckte Skalierung als Aushilfszifferblatt zu verwenden ist.

Die Anordnung einer Haltewand auf der Rückseite der Frontplatte erweist sich als vorteilhaft, da es sich hierbei um eine optisch besonders unauffällige Methode zur Halterung des einzuschiebenden Zifferblattes handelt.

Auch für die Haltewand ist eine Skalierung vorgesehen, die bereits bei nicht eingelegtem Zifferblatt als ersatzweise nutzbare Skalierung in Form eines Aushilfszifferblatts verwendbar ist, so daß das Anzeigeinstrument auch ohne eingeschobenes Zifferblatt bereits verwendbar ist.

Die Anordnung einer Gleitschiene auf der Rückseite der Frontplatte vereinigt in vorteilhafter Weise eine optische Unauffälligkeit der Gleitschiene in Bezug auf die Betrachtungsrichtung auf das Anzeigeinstrument mit einem geringen Aufwand an Halteelementen für die Halterung des Zifferblatts an der Frontplatte.

Ist der Zeiger mittels einer die Frontplatte durchdringenden Welle drehbar gelagert und ist das Zifferblatt so gestaltet, daß es eine Aussparung dergestalt aufweist, daß die Welle von der Einführrichtung des Zifferblattes aus beim Einführen in der Aussparung zu liegen kommt, so ergibt sich der Vorteil, daß das Zifferblatt ohne eine Demontage des Zeigers an der Frontplatte befestigt werden kann.

### Zeichnung

Ausführungsbeispiele der Erfindung sind in der Zeichnung dargestellt und in der nachfolgenden Beschreibung näher erläutert.

Es zeigen:
Figur 1a eine Draufsicht auf ein Anzeigeinstrument mit Haltewand,
Figur 1b eine Seitenansicht des Anzeigeinstruments mit Haltewand,
Figur 2a ein Anzeigeinstrument mit zwei Gleitschienen in Draufsicht,
Figur 2b eine Seitenansicht des Anzeigeinstruments mit zwei Gleitschienen,
Figur 3 eine Seitenansicht eines Anzeigeinstruments mit Vertiefung
Figur 4a ein rundes Zifferblatt mit kreissegmentförmigem Ausschnitt,
Figur 4b ein rechteckiges Zifferblatt,
Figur 4c ein halbkreisförmiges Zifferblatt.

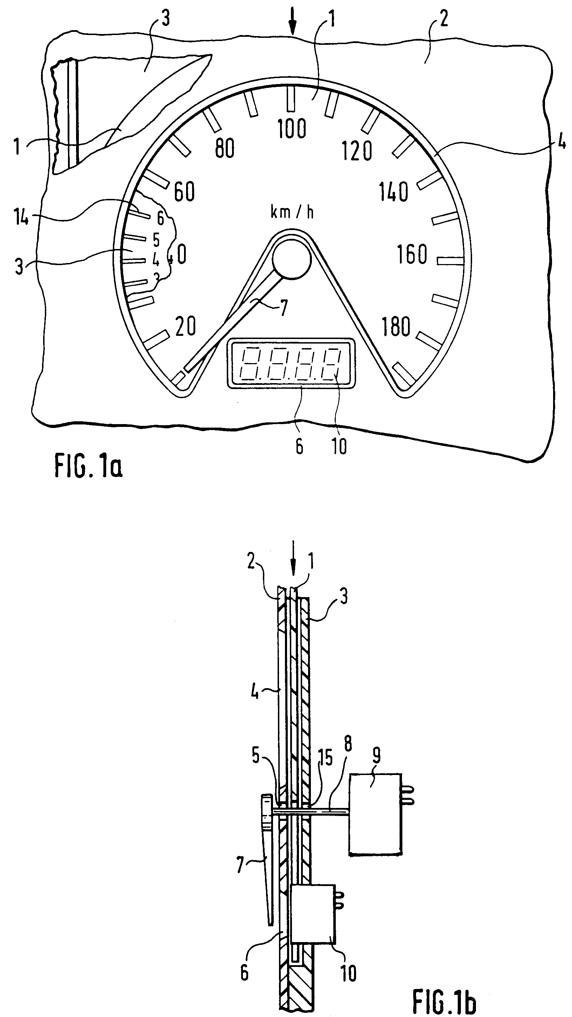

Die Figuren 1a und 1b zeigen je eine Ansicht eines Anzeigeinstrumentes mit einer Frontplatte 2 auf deren Rückseite eine Haltewand 3 befestigt ist. Die Haltewand 3 ist dabei in einem Abstand von der Frontplatte 2 befestigt, so daß ein Spalt entsteht, in den ein Zifferblatt 1 einschiebbar ist. Die Einschieberichtung ist dabei parallel zu den Ebenen der Frontplatte 2 und der Haltewand 3. Ein Zeigerantriebswerk 9 treibt rotatorisch eine Welle 8 an, auf der ein Zeiger 7 senkrecht zur Welle 8 montiert ist. Die Welle 8 durchstößt dabei zwischen Zeiger 7 und Zeigerantriebswerk 9 die Ebenen der Haltewand 3 und der Frontplatte 2. Dort wo die Welle 8 die Haltewand 3 durchstößt, weist die Haltewand 3 eine ein reibungsloses Bewegen der Welle 8 erlaubende Durchführung 15 auf. Ebenso weist die Frontplatte 2 für die Welle 8 eine entsprechende Durchführung 5 auf. Unterhalb des Durchstoßpunktes der Welle 8 durch die Frontplatte 2 weist die Frontplatte 2 einen Durchbruch 6 auf, hinter dem eine Digitalanzeige 10 angeordnet ist. In dem Bereich, wo der Zeiger 7 eine rotatorische Bewegung ausführen soll, weist die Frontplatte 2 eine kreissegmentförmige, den Anzeigebereich des Zeigers 7 abdeckende Aussparung 4 auf. Das Zifferblatt 1 ist so gestaltet, daß seine Ausmaße das Ausmaß der Aussparung 4 übersteigen, wobei die Ausmaße so gewählt sind, daß das Zifferblatt 1 durch die Haltewand 3 und deren Befestigungsmittel zur Frontplatte 2 im eingelegten Zustand in seiner endgültigen Lage fixiert ist. Das Zifferblatt 1 weist dabei eine Skalierung auf, die im eingelegten Zustand deckungsgleich mit der Aussparung 4 angeordnet ist. Auf der Haltewand 3 ist deckungsgleich mit der Aussparung 4 eine Skalierung 14 aufgebracht.

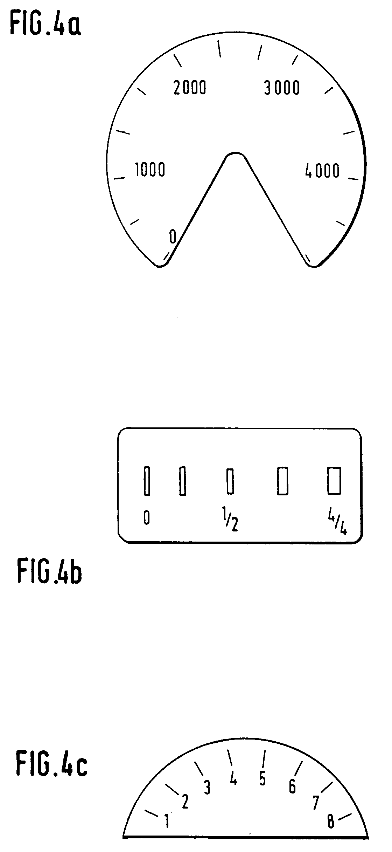

Durch Einschieben in paralleler Richtung zur Ebene der Frontplatte 2 gelangt das Zifferblatt 1 zwischen die Haltewand 3 und die Frontplatte 2. Dabei kommt die auf dem Zifferblatt 1 angebrachte Skalierung 14 exakt hinter der Aussparung 4 zu liegen. Die Haltewand 3 und ihre Befestigungselemente zur Befestigung an der Frontplatte 2 sind dabei so ausgebildet, daß eine Fixierung des Zifferblatts 1 in seiner eingelegten Lage erfolgt. Ist kein Zifferblatt 1 in den Spalt zwischen der Haltewand 3 und der Frontplatte 2 eingeschoben, so dient die auf der Haltewand 3 angebrachte Skalierung 14 als Aushilfszifferblatt, beispielsweise falls kein passendes Zifferblatt 1 zur Hand ist. Zusätzlich dient die Digitalanzeige 10 zur Anzeige weiterer fahrzeugspezifischer Informationen, wie z.B. des Kilometerstandes. Das Zifferblatt 1 ist dabei gemäß der Figur 4a ausgestaltet. Der kreissegmentförmige Ausschnitt im Zifferblatt 1 dient dazu, daß die Welle 8 beim Einschieben des Zifferblattes 1 nicht behindert oder beschädigt wird. So kann ein Einschieben des Zifferblattes 1 erfolgen, ohne irgendein anderes Teil, insbesondere den Zeiger 7, des Anzeigeinstrumentes zu demontieren.

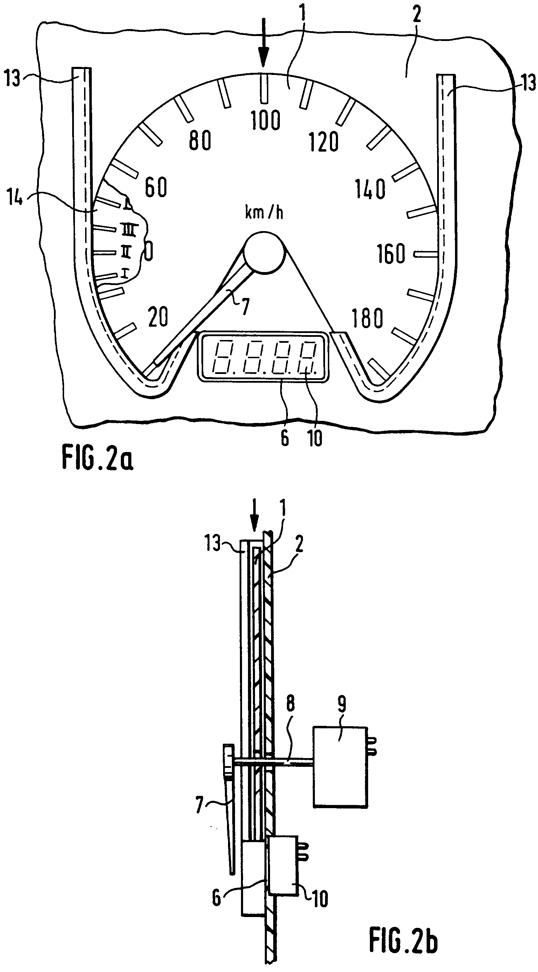

In den Figuren 2a und 2b sind Ansichten eines weiteren Ausführungsbeispieles für ein Anzeigeinstrument dargestellt, welches sich vom in den Fiuguren 1a un 1b dargestellten Anzeigeinstrument durch folgende Unterschiede abhebt. Gleiche Ziffern in den Figuren 1a, 1b, 2a, 2b bezeichnen hierbei gleiche Elemente. Anstelle der Haltewand 3 weist die Fronplatte 2 hier zwei J-förmig gebogene Halteschienen 13 auf, die auf der dem Betrachter zugewandten Seite, also der Vorderseite, der Frontplatte 2 befestigt sind. Die Skalierung 14 ist statt auf der hier nicht vorhandenen Haltewand 3 direkt auf der Frontplatte 2 aufgedruckt.

Die beiden J-förmigen Halteschienen 13 sind so angeordnet, daß ein wie das in Figur 4a dargestellte Zifferblatt 1 ausgebildetes Zifferblatt 1 in den Spalt zwischen den Halteschienen 13 und der Frontplatte 2 eingeschoben werden kann und dabei in einer stabilen, endgültigen Lage fixiert wird. Auch hier weist das Zifferblatt 1 wieder die kreissegmentförmige Aussparung auf, so daß der Zeiger 7 mit der Welle 8 ohne Demontage beim Einschieben des Zifferblatts 1 innerhalb dieser kreissegmentförmigen Aussparung zu liegen kommt. Die Einführungsrichtung des Zifferblattes 1 liegt wieder parallel zur Ebene der Frontplatte 2. Auch hier ist es vorgesehen, daß das Zifferblatt 1 beim Einschieben so fest fixiert wird, daß ein versehentliches Lösen oder gar ein Vibrieren besipielsweise während eines Fahrbetriebs eines zum Anzeigeinstrument gehörenden Fahrzeuges ausgeschlossen ist. Zum Ausschluß solcher unerwünschten Bewegungen sind z.B. Dämpfungselemente aus einem elastischen oder einem plastischen Material einsetzbar. Ebenso ist vorgesehen, daß sich der Spalt zwischen den Halteschienen 13 und der Frontplatte in Einführungsrichtung verjüngt, so daß eine Klemmung des Zifferblattes 1 in der stabilen endgültigen Lage erreicht wird.

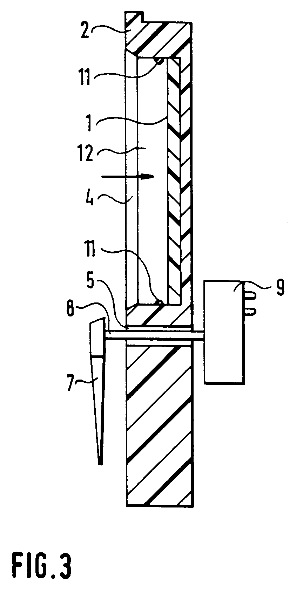

In Figur 3 ist ein weiteres Ausführungsbeispiel für ein Anzeigeinstrument dargestellt. Die Numerierung der Figuren 1a, 1b, 2a und 2b wurde wieder beibehalten. Die Frontplatte 2 weist hierbei eine Vertiefung 12 auf, in die senkrecht zur Oberfläche der Frontplatte 2 das Zifferblatt 1 eingelegt werden kann. Dabei sind innerhalb der Vertiefung 12 an deren Seiten Rastelemente 11 vorgesehen, die ein Einrasten des Zifferblattes 1 in der stabilen engültigen Lage bewirken.

Das Einlegen des Zifferblattes 1 senkrecht zur Oberfläche der Frontplatte 2 bietet den Vorteil, daß diese Einführungsrichtung besonders leicht zugänglich ist.

Das Anzeigeinstrument mit dem einsetzbaren Zifferblatt 1 ist nicht auf die Anwendung von Zifferblättern 1, wie sie in der Figur 4a dargestellt sind, oder die Anwendung für drehbar gelagerte Zeiger 7 festgelegt. Vielmehr ist es ebenso vorgesehen, daß rechteckige Zifferblätter 1, wie in Figur 4b dargestellt oder halbkreisförmige Zifferblätter 1, wie in Figur 4c dargestellt, für drehbar gelagerte oder translatorisch bewegliche Zeiger 7 Anwendung finden. Allen Ausführungsbeispielen gemeinsam ist die Tatsache, daß ein Zifferblatt 1 ohne großen Aufwand nach Fertigstellung des Anzeigeinstruments in das Anzeigeinstrument eingeschoben werden kann, ohne irgendwelche Teile des Anzeigeinstruments zu demontieren. Dieses Anzeigeinstrument ist somit besonders für Anwendungsfälle geeignet, bei denen verschiedene Zifferblätter 1 mit z.B. verschiedenen Einheiten, Farbgebungen etc. für ein und dasselbe Anzeigeinstrument verwendbar sein sollen. Es wird somit erspart, verschiedene Anzeigeinstrumente mit festen Zifferblättern 1 herzustellen, und somit ist es sogar möglich, ein Fahrzeug mit Anzeigeinstrumenten auszustatten und erst bei der Endmontage des Fahrzeugs das entsprechende gewünschte Zifferblatt 1 am Anzeigeinstrument zu befestigen, oder dem Käufer die Auswahl des einzuschiebenden Zifferblatts 1 selbst zu überlassen.

Außerdem ist es vorgesehen, daß jederzeit ein Wechsel des Zifferblattes 1 ohne besonderen Aufwand möglich ist. Außerdem bietet dieses Anzeigeinstrument Vorteile beim Kundenservice eines Fahrzeuglieferanten, da als Ersatzteil nur ein Anzeigeinstrumententyp vorrätig sein muß, der dann mit dem entsprechenden Zifferblatt 1 ausgestattet wird.

## Patentansprüche

1. Anzeigeinstrument mit einem Zifferblatt und einem vor dem Zifferblatt angeordneten beweglichen Zeiger, dadurch gekennzeichnet, daß das Anzeigeinstrument eine Frontplatte (2) aufweist, über der der bewegliche Zeiger (7) beweglich angeordnet ist, und an der das Zifferblatt (1) durch Einschieben befestigbar ist.

2. Anzeigeinstrument nach Anspruch 1, dadurch gekennzeichnet, daß das Zifferblatt (1) lösbar befestigbar ist.

3. Anzeigeinstrument nach Anspruch 1 oder 2, dadurch gekennzeichnet, daß das Zifferblatt (1) mittels Rastelementen (11) an der Frontplatte (2) gehaltert ist.

4. Anzeigeinstrument nach einem der Ansprüche 1 bis 3, dadurch gekennzeichnet, daß die Frontplatte (2) eine Vertiefung (12) aufweist, in die das Zifferblatt (1) einlegbar ist.

5. Anzeigeinstrument nach einem der Ansprüche 1 bis 3, dadurch gekennzeichnet, daß annähernd parallel zur Frontplatte (2) auf deren Vorderseite wenigstens eine Gleitschiene (13) angeordnet ist, und daß das Zifferblatt (1) in den Spalt zwischen der wenigstens einen Gleitschiene (13) und der Frontplatte (2) einschiebbar ist.

6. Anzeigeinstrument nach einem der Ansprüche 1 bis 5, dadurch gekennzeichnet, daß die Frontplatte (2) eine Skalierung (14) aufweist, über der das Zifferblatt (1) beim Befestigen zu liegen kommt.

7. Anzeigeinstrument nach einem der Ansprüche 1 bis 3, dadurch gekennzeichnet, daß annähernd parallel zur Frontplatte (2) auf deren Rückseite eine Haltewand (3) angeordnet ist, und daß das Zifferblatt (1) in den Spalt zwischen der Haltewand (3) und der Frontplatte (2) einschiebbar ist und daß die Frontplatte (2) im Bereich vor dem eingelegten Zifferblatt (1) eine Aussparung (4) aufweist.

8. Anzeigeinstrument nach Anspruch 7, dadurch gekennzeichnet, daß die Haltewand (3) eine Skalierung (14) aufweist, über der das Zifferblatt (1) beim Befestigen zu liegen kommt.

9. Anzeigeinstrument nach einem der Ansprüche 1 bis 3, dadurch gekennzeichnet, daß annähernd parallel zur Frontplatte (2) auf deren Rückseite wenigstens eine Gleitschiene (13) angeordnet ist, und daß das Zifferblatt (1) in den Spalt zwischen der wenigstens einen Gleitschiene (13) und der Frontplatte (2) einschiebbar ist und daß die Frontplatte (2) im Bereich vor dem eingelegten Zifferblatt (1) eine Aussparung (4) aufweist.

10. Anzeigeinstrument nach einem der Ansprüche 1 bis 9, dadurch gekennzeichnet, daß der Zeiger (7) mittels einer die Frontplatte (2) durchdringenden Welle (8) drehbar gelagert ist und daß das Zifferblatt (1) eine Aussparung aufweist, in der bei an der Frontplatte (2) befestigtem Zustand die Welle (8) des Zeigers (7) zu liegen kommt und die beim Befestigen des Zifferblattes (1) eine Bewegung der Welle (8) in ihre endgültige Position erlaubt.
